# EUROPEAN PATENT SPECIFICATION

(11) **EP 1 672 983 B1**
(45) Date of publication and mention of the grant of the patent: **27.10.2010**
(21) Application number: 04737039.0
(22) Date of filing: 18.06.2004
(51) Int. Cl.: A21D 13/00, A21D 13/08, A21D 8/02

(54) **METHOD OF PRODUCTION OF CROISSANT TYPE PASTRY PRODUCTS WITH CHARCUTERIE AND CREAM CHEESE FILLING, AND WITH INCORPORATION OF OLIVE OIL INTO THE DOUGH**
VERFAHREN ZUR HERSTELLUNG VON CROISSANT-TYPISCHEN PRODUKTEN MIT FLEISCH- UND KÄSEFÜLLUNG SOWIE MIT OLIVENÖL ENTHALTENDEM TEIG
PROCEDE DE PRODUCTION DE PRODUITS DE PATISSERIE DE TYPE CROISSANTS CONTENANT UNE FARCE DE CHARCUTERIE ET DE FROMAGE A LA CREME, AVEC INCORPORATION D'HUILE D'OLIVE DANS LA PATE

(30) Priority: 14.10.2003 GR 2003100415
(43) Date of publication of application: 28.06.2006
(73) Proprietor: CRETA FARM SOCIETE ANONYME INDUSTRIAL AND COMMERCIAL trading as CRETA FARM S.A., 74100 Rethymnon (GR)
(72) Inventor: DOMAZAKIS, Emmanouil, 741 00 Rethymnon (GR)
(74) Representative: Betten & Resch
(86) International application number: PCT/GR2004/000034
(87) International publication number: WO 2005/034638

(56) References cited:
- EP-A- 1 157 613
- WO-A-98/48634
- WO-A-99/02039
- WO-A-02/096207
- CA-A- 1 040 479
- CH-A- 687 799
- FR-A- 2 595 211
- GB-A- 2 369 983
- US-A- 6 165 522

## Description

The present invention refers to the production of *croissant type* pastries, with cooked meat and cream cheese filling, bearing the following traits:
1. The use of olive oil during dough preparation instead of the high melting point animal fats or margarine usually used.
2. The use of emulsion, facilitating the olive oil incorporation to the dough. The emulsion used is characterized by its high stability and provides the dough with extra mechanical strength for its further processing.
3. The use of liquid leaven prepared by a specific combination of microbial cultures, which ensure the consistency of the primary culture as well as that of the organoleptic traits of the final product (structure, colour, taste and flavour).
4. The application of suitable technological procedures and processes developed, aiming at:
   a. Dough preparation of high mechanical strength facilitating its further processing.
   b. Stabilization of the uniform honeycomb structure of the final product in conjuction with sustaining its organoleptic traits of fressness upon storage.
   c. Stable incorporation into the dough of the directly or indirectly mixed olive oil (Differentiating Factor) and maximum preservation of its organoleptic, physicochemical and nutritional characteristics.
   d. Long-term conservation (at least 30 days) under refrigeration (4°-6°C).

### OBJECTIVE OF THE INVENTION

This invention is aiming at the production of *croissant type* pastries, with cooked meat and cream cheese filling, with :
1. The direct or indirect olive oil incorporation instead of the high melting point animal fats or margarine usually used
2. The addition of combined technology auxiliary products and
3. The application of specific technological processes.

The aforementioned were achieved with the use of an emulsion of specific composition characterized by high stability which confers supreme mechanical resistance to the dough for its further processing as well as with the use of liquid leaven prepared by a specific combination of microbial cultures which ensure the consistency of the primary culture as well as that of the organoleptic features and the long-term conservation of the final product.

The present invention provides *croissant type* pastries with direct or indirect olive oil incorporation to the dough, cooked meat and cream cheese filling according to the following preparation protocol:

### DESCRIPTION OF PRODUCTION PHASES

### PHASE 1

Initially the emulsion and the liquid leaven are prepared. The emulsion (step1) is prepared by distilled monoglycerides homogenized in a high-speed mixer in the presence of 40°-45°C water. This is followed by the addition of olive oil, dextrose, fructose and egg yolk. The liquid leaven (step 2) is prepared by the inoculation of rye flour with specially formulated microbial cultures followed by incubation at 32°C for 18-24 hours in a dough kneader.

### PHASE 2

This is the main production phase; Flour and water are combined with liquid leaven, prepared as previously described (step 2), and kneaded together. The resulting dough is then transferred to maturation chambers where it remains for 120 minutes at 30°C and Relative Humidity (RH) 80 %. Further on, the rest of the ingredients (i.e. flour, water, emulsion (step 1), sugar, eggs, olive oil and baker's leaven) are added. The mature dough is transferred to the shaping machine (extruder) and rolled into shape. The shaped dough passes through a series of dough rotors and increases in thickness. Dough sheets are then flattened down to 2.8-3 mm. The sheets that result from this procedure are now placed in a cutting-filling-folding machine where they acquire the croissant shape and simultaneously the cooked meat filling is incorporated. The folded croissants are placed into tin trays equipped with grooves (moulds) and transferred to maturation chambers, where they are left to mature for 8 hours at 28°C and RH 80%. The baking takes place next, at 180°C for 12-15 min. The baked product is then cooled down in the presence of high microbial quality air. The cream cheese is then automatically injected into the product. Finally the product is packed in a modified atmosphere consisting of protective gases (CO₂/N₂), labeled and stored under refrigeration at 4°-6°C.

The *croissant type* dough with olive oil, cooked meat and cream cheese filling, prepared according to the present protocol has excellent stability and homogeneity as far as structure is concerned due to the specific composition of the emulsion used for the indirect olive oil mixing, the use of liquid leaven and the application of two phases of extended maturation prior to and after the shaping of the dough. The physicochemical features of the olive oil that these products contain remain unspoiled due to the low temperatures applied during production thus contributing to the preservation of the initial freshness of the product.

## Claims

1. Method for the preparation of *croissant type* pastries with cooked meat and cream cheese filling **characterized by** the direct and indirect incorporation of olive oil during the preparation of the dough, **characterised in that** the olive oil replaces the high melting point animal fat or the margarine normally used, said method including the following step:
a. Preparation of an emulsion of distilled monoglycerides in the presence of 40 - 45 °C water, by homogenization in a high-speed mixer, subsequently, addition of olive oil, dextrose, fructose and egg yolk.
b. Preparation of liquid leaven as follows: inoculation of rye flour substrate with specially formulated microbial cultures followed by incubation at 32°C for 18-24 hours in a dough kneader.
c. Mixing of flour and water with a quantity of liquid leaven, which has been prepared as described above (b), and subsequent kneading.
d. The kneaded dough is moved to maturation chambers, where it remains for 120 minutes at a temperature of 30 °C and RH 80 %. After that, the remaining ingredients (flour, water, emulsion (a), sugar, eggs, olive oil, baker's leaven) are added to it.
e. The mature dough is transferred to the shaping machine (extruder) and rolled into shape.
f. The shaped dough passes through a series of dough rotors and increases in thickness. Dough sheets are then flattened down to 2.8-3 mm.
g. The sheets that result from this procedure are now placed in a cutting-filling-folding machine where they acquire the croissant shape and simultaneously the cooked meat filling is incorporated.
h. The folded croissants are placed into tin trays equipped with grooves (moulds) and transferred to maturation chambers, where they are left to mature for 8 hours at 28°C and RH 80%.
i. The baking takes place next at 180°C for 12-15 min.
j. The baked product is then cooled down in the presence of high microbial quality air. The cream cheese is then automatically injected into the product.
k. Finally the product is packed in a modified atmosphere consisting of protective gases (CO₂/N₂), labeled and stored under refrigeration at 4°-6°C.

2. The *croissant type* pastries with cooked meat, cream cheese filling and with olive oil incorporated into the dough, which can be manufactured according to the protocol of claim (1).

## Patentansprüche

1. Verfahren zur Herstellung von Croissant-artigen Backwaren mit einer Füllung aus gekochtem Fleisch und Frischkäse, das sich durch die direkte und indirekte Einbringung von Olivenöl während der Herstellung des Teiges auszeichnet,
**dadurch gekennzeichnet, dass**
das Olivenöl das hochschmelzende tierische Fett oder die Margarine, die üblicherweise verwendet werden, ersetzt, wobei das Verfahren die folgenden Schritte umfasst:
a. die Herstellung einer Emulsion aus destillierten Monoglyceriden in Gegenwart von 40-45 °C warmem Wasser durch Homogenisierung in einem Hochgeschwindigkeitsmixer und durch anschließende Zugabe von Olivenöl, Dextrose, Fructose und Eigelb;
b. die Herstellung von flüssigem Sauerteig, wie folgt: die Inokulation von Roggenmehlsubstrat mit speziell formulierten mikrobiellen Kulturen, gefolgt von der Inkubation bei 32 °C für 18-24 Stunden in einem Teigkneter;
c. das Mischen von Mehl und Wasser mit einer Menge des flüssigen Sauerteigs, der wie oben unter b. beschrieben hergestellt worden ist, und das anschließende Kneten;
d. das Überführen des gekneteten Teiges in Reifekammern, in denen der Teig für 120 Minuten bei einer Temperatur von 30 °C und einer relativen Feuchtigkeit von 80 % verbleibt, und die anschließende Zugabe der restlichen Bestandteile (Mehl, Wasser, Emulsion (a), Zucker, Eier, Olivenöl, Bäckersauerteig) zu dem Teig;
e. das Überführen des vollentwickelten Teiges in eine Formmaschine (Extruder) und das Informrollen;
f. das Durchleiten des geformten Teiges durch eine Reihe von Teigrotoren, wobei sich die Dicke desselben erhöht, und das anschließende Flachdrücken der Teiglagen auf 2,8-3 mm;
g. das Einbringen der Lagen, die aus diesem Verfahrensablauf resultieren, in eine Schneid-Füll-Falt-Maschine, wo sie die Croissantform annehmen und gleichzeitig die Füllung aus gekochtem Fleisch eingebracht wird;
h. das Platzieren der gefalteten Croissants auf Blecheinsätze mit Rillen (Formen) und das Überführen in Reifekammern, wo sie für 8 Stunden bei 28 °C und einer relativen Feuchtigkeit von 80 % reifen gelassen werden;
i. das Backen bei etwa 180 °C für 12-15 min;
j. das Abkühlen des gebackenen Produktes in Gegenwart von Luft von hoher mikrobieller Qualität und das anschließende automatische Einspritzen des Frischkäses in das Produkt;
k. das abschließende Abpacken des Produktes unter einer modifizierten Atmosphäre, bestehend aus Schutzgasen (CO₂/N₂), das Beschriften und das Lagern unter Kühlbedingungen bei 4-6 °C.

2. Croissant-artige Backwaren mit einer Füllung aus gekochtem Fleisch und Frischkäse und mit in den Teig eingearbeitetem Olivenöl, die nach dem Protokoll von Anspruch 1 hergestellt werden können.

## Revendications

1. Procédé de préparation de viennoiseries de type croissant garnies de viande cuite et de fromage fondu, **caractérisé par** l'incorporation directe et indirecte d'huile d'olive lors de la préparation de la pâte, également **caractérisé en ce que** l'huile d'olive remplace la margarine ou la matière grasse animale à point de fusion élevé normalement utilisée, ledit procédé comprenant les étapes suivantes :
a. Préparation d'une émulsion de monoglycérides distillés dans de l'eau de 40 à 45 °C, par homogénéisation dans un mélangeur haute vitesse, cela étant suivi de l'addition d'huile d'olive, de dextrose, de fructose et de jaune d'oeuf.
b. Préparation de levain liquide par inoculation de cultures microbiennes spécialement formulées dans un substrat à base de farine de seigle, cela étant suivi d'une incubation à 32 °C pendant 18 à 24 heures dans un pétrin.
c. Mélange de la farine et de l'eau avec une quantité de levain liquide ayant été préparé comme décrit plus haut au point (b), puis pétrissage.
d. La pâte pétrie est transférée en chambre de maturation, où elle reste pendant 120 minutes à une température de 30 °C et sous une humidité résiduelle de 80 %. Suite à cela, les ingrédients restants (farine, eau, émulsion (a), sucre, oeufs, huile d'olive, levain) lui sont ajoutés.
e. La pâte est transférée, après maturation, dans la machine à façonner (extrudeuse) et mise en forme.
f. La pâte façonnée passe à travers une série de rotors de pétrissage et gagne en épaisseur. Les feuilles de pâte sont ensuite aplaties jusqu'à une épaisseur de 2,8 à 3 mm.
g. Les feuilles obtenues à l'issue de cette procédure sont placées dans une machine de découpe-garnissage-pliage où elles sont façonnées en forme de croissant et au niveau de laquelle la garniture à base de viande cuite est incorporée.
h. Les croissants pliés sont placés sur des plateaux en étain comportant des cannelures (moules) et transférés en chambre de maturation, pour y rester pendant 8 heures à 28 °C et sous une humidité résiduelle de 80 %.
i. La cuisson se fait ensuite à 180 °C pendant 12 à 15 minutes.
j. Le produit cuit est ensuite refroidi en présence d'un air de qualité microbienne élevée. Le fromage fondu est alors injecté de façon automatique dans le produit.
k. Finalement, le produit est conditionné sous atmosphère modifiée à base de gaz protecteurs (CO₂/N₂), étiqueté et conservé au froid à 4 à 6 °C.

2. Viennoiseries de type croissant garnies de viande cuite et de fromage fondu dans la pâte desquelles est incorporée de l'huile d'olive et qui peuvent être fabriquées selon le protocole de la revendication (1).
